# EUROPÄISCHE PATENTANMELDUNG

(11) **EP 2 784 397 A2**
(43) Veröffentlichungstag der Anmeldung: **01.10.2014**
(21) Anmeldenummer: 14160238.3
(22) Anmeldetag: 17.03.2014
(51) Int. Cl.: F24C 14/00, H02P 31/00

(54) **Reinigungsvorrichtung für Küchengeräte**

(30) Priorität: 19.03.2013 DE 102013004660; 02.10.2013 DE 102013110975
(71) Anmelder: Hanning Elektro-Werke GmbH & Co. KG, 33813 Oerlinghausen (DE)
(72) Erfinder: Schneider, Jochen, 33813 Oerlinghausen (DE); Peter, Julian, 33813 Oerlinghausen (DE)
(74) Vertreter: Wickord, Wiro

(57) **Zusammenfassung**

Die Erfindung betrifft eine Reinigungsvorrichtung für Küchengeräte, insbesondere Kombidämpfer, Back- oder Gargeräte, mit einem zu reinigenden Garraum (1), welcher durch wenigstens eine Wandung begrenzt ist und an dem wenigstens eine Auslassöffnung (16, 22) für eine Flüssigkeit vorgesehen ist, mit einem Ventilationsrad (7), welches dem Garraum zugeordnet ist und einem Antriebsmotor (8) für das Ventilationsrad, mit einem Sammelbehältnis (2), welches die über die Auslassöffnung aus dem Garraum austretende Flüssigkeit wenigstens temporär aufnimmt und sammelt, mit einer an ein Wasserreservoir anschließbaren, wahlweise verschließbaren oder freigebbaren Zulaufleitung (33), über die Flüssigkeit zuführbar ist, mit einer Umwälzpumpe (3) zum Pumpen von Flüssigkeit, umfassend ein Umwälzpumpenrad (18) und einen das Umwälzpumpenrad antreibenden Umwälzpumpenmotor (19), mit einer Umwälzleitung (17), über die von der Umwälzpumpe geförderte Flüssigkeit dem zu reinigenden Garraum zuführbar ist, mit einer an dem Sammelbehältnis angeschlossenen Ablaufleitung (6) zum Abführen der von dem Sammelbehältnis aufgenommenen Flüssigkeit und mit einer Steuereinheit (10) zum Betreiben des Antriebsmotors und des Umwälzpumpenmotors, wobei die Steuereinrichtung eine dezentrale Leistungselektronik (9) mit einem ersten Wechselrichter (24) für den Antriebsmotor (8) des Ventilationsrads (7) und mit einem zweiten Wechselrichter (25) für den Umwälzpumpenmotor (19) sowie einer für die Wechselrichter (24, 25) gemeinsam vorgesehenen und an ein Versorgungsnetz anschließbare Versorgungseinheit (27), umfassend einen Gleichrichter, einen Zwischenkreis und einen Leistungsfaktorkorrekturfilter, aufweist.

## Beschreibung

Die Erfindung betrifft eine Reinigungsvorrichtung für Küchengeräte, insbesondere Kombidämpfer, Back- oder Gargeräte, mit einem zu reinigenden Garraum, welcher durch wenigstens eine Wandung begrenzt ist und an dem wenigstens eine Auslassöffnung für eine Flüssigkeit vorgesehen ist, mit einem Ventilationsrad, welches dem Garraum zugeordnet ist und einem Antriebsmotor für das Ventilationsrad, mit einem Sammelbehältnis, welches die über die Auslassöffnung aus dem Garraum austretende Flüssigkeit wenigstens temporär aufnimmt und sammelt, mit einer an ein Wasserreservoir anschließbaren, wahlweise verschließbaren oder freigebbaren Zulaufleitung, über die Flüssigkeit zuführbar ist, mit einer Umwälzpumpe zum Pumpen von Flüssigkeit, umfassend ein Umwälzpumpenrad und einen das Umwälzpumpenrad antreibenden Umwälzpumpenmotor, mit einer Umwälzleitung, über die von der Umwälzpumpe geförderte Flüssigkeit dem zu reinigenden Garraum zuführbar ist, mit einer an dem Sammelbehältnis angeschlossenen Ablaufleitung zum Abführen der von dem Sammelbehältnis aufgenommenen Flüssigkeit und mit einer Steuereinheit zum Betreiben des Antriebsmotors und des Umwälzpumpenmotors.

Üblicherweise erfolgt die Ansteuerung der Ventilations- und Pumpenmotoren von Kombidämpfern, Gargeräten und ähnlichen Ofensystemen getrennt über separate Elektronikkomponenten. Je Motor ist hierbei eine Leistungselektronik vorgesehen, die zentral an dem Motor selbst untergebracht ist. Während die Pumpenmotoren auf Umrichter verzichten, umfasst der Ventilationsmotor eine Leistungselektronik, in der die Versorgungseinheit mit Gleichrichter, Zwischenkreis, Leistungsfaktorkorrekturfilter einerseits und dem Wechselrichter andererseits funktional und räumlich integriert ausgebildet sind.

Aufgabe der Erfindung ist es, die Ansteuerung für ein Gargerät zu vereinfachen und kostengünstig zu gestalten.

Zur Lösung der Aufgabe ist die Erfindung in Verbindung mit dem Oberbegriff des Patentanspruchs 1 dadurch gekennzeichnet, dass die Steuereinrichtung eine dezentrale Leistungselektronik mit einem ersten Wechselrichter für den Antriebsmotor des Ventilationsrads und mit einem zweiten Wechselrichter für den Umwälzpumpenmotor sowie einer für die Wechselrichter gemeinsam vorgesehenen und an ein Versorgungsnetz anschließbare Versorgungseinheit, umfassend einen Gleichrichter, einen Zwischenkreis und einen Leistungsfaktorkorrekturfilter, aufweist.

Der besondere Vorteil der Erfindung besteht darin, dass sich durch die Verwendung einer gemeinsamen, dezentral im Bezug zu den Motoren vorgesehenen Versorgungseinheit Kostenvorteile ergeben und zugleich der Bauraumbedarf sinkt. Die dezentrale Unterbringung der Leistungselektronik insgesamt beziehungsweise der Versorgungseinheit erlaubt einen Betrieb der Motoren bei hohen Umgebungstemperaturen, während die Versorgungseinheit und gegebenenfalls auch die Wechselrichter vorzugsweise räumlich getrennt in einem Installationsraum bei einer niedrigeren Umgebungstemperatur untergebracht sind und betrieben werden. Daher können hierfür weniger temperaturbeständige und preiswertere Komponenten eingesetzt werden. Zudem kann durch die getrennte Anordnung von Motoren, Wechselrichtern und Versorgungseinheit der vorhandene Bauraum in optimierter Weise ausgenutzt werden, da eine Mehrzahl kleiner Komponenten in dem geräteseitig zur Verfügung stehenden Bauraum einfacher unterzubringen ist als eine große Baueinheit. Ferner kann durch die Verwendung eines Wechselrichters für den Umwälzpumpenmotor dieser nach Art eines bürstenlosen Gleichstrommotors realisiert und drehzahlvariabel beziehungsweise -geregelt angetrieben werden. Hierdurch steigt die Effizienz.

Nach einer bevorzugten Ausführungsform der Erfindung ist eine Entleerungspumpe mit einem Entleerungspumpenrad und einem das Entleerungspumpenrad antreibenden Entleerungspumpenmotor vorgesehen. Die Entleerungspumpe dient zum Abpumpen der aus dem Garraum austretenden Flüssigkeit über die Ablaufleitung. Als Teil der Leistungselektronik ist hierbei ein dritter Wechselrichter für den Entleerungspumpenmotor vorgesehen, wobei der dritte Wechselrichter mit der gemeinsamen Versorgungseinheit zusammenwirkt. Die Versorgungseinheit speist insofern alle drei Wechselrichter. Vorteilhaft kann die Entleerungspumpe durch die Verwendung der ohnehin vorgesehenen dezentralen Leistungselektronik kostengünstig angesteuert werden. Die Versorgungseinheit der Leistungselektronik mit dem Gleichrichter, dem Zwischenkreis und dem Leistungsfaktorkorrekturfilter dienen insofern der Versorgung beziehungsweise Ansteuerung des Ventilationsmotors, des Umwälzpumpenmotors und des Entleerungspumpenmotors. Es ergibt sich ein hohes Maß an Integration und eine Reduzierung des Montage- und Installationsaufwands.

Beispielsweise kann die gesamte Leistungselektronik als räumliche Einheit ausgebildet und entfernt von den Motoren vorgesehen werden. Die Wechselrichter sind dann unmittelbar benachbart zu der Versorgungseinheit mit dem gemeinsamen Gleichrichter, Zwischenkreis und Leistungsfaktorkorrekturfilter realisiert. Ebenso kann nach der Erfindung vorgesehen sein, dass die Leistungselektronik eine dezentrale Versorgungseinheit vorsieht, welche die in dem System für die Motoren vorgesehenen Wechselrichter speist. Die Wechselrichter selbst können räumlich benachbart zu den Motoren vorgesehen und beispielsweise im Bereich eines Lagerschilds der Motoren festgelegt werden. Hierdurch ergibt sich der Vorteil, dass die auf die Motorleitungen zurückgehenden elektromagnetischen Störeinflüsse in dem Gerät reduziert werden.

Die Leistungselektronik insgesamt oder die Versorgungseinheit können beispielsweise auf einer Hauptsteuerungsplatine des Küchengeräts vorgesehen werden. Die Hauptsteuerung für das Küchengerät wird regelmäßig an einem Ort vorgesehen beziehungsweise verbaut sein, an dem keine unzulässig hohen beziehungsweise kritischen Temperaturen vorherrschen. Die funktionale beziehungsweise räumliche Integration der Leistungselektronik oder der Versorgungseinheit in der Hauptsteuerung kann unter Bauraum- und Kostengesichtspunkten vorteilhaft sein und die Montage vereinfachen.

Nach einer Weiterbildung der Erfindung ist eine zentrale Steuereinheit vorgesehen, welche mit den Wechselrichtern der dezentralen Leistungselektronik zusammenwirkt. Das Vorsehen der zentralen Steuereinheit stellt sicher, dass die Motoren unabhängig voneinander betrieben werden und in einen einheitlichen Gesamtsteuerungsprozess eingebunden sind. Ebenso besteht die Möglichkeit, das System bei Verwendung der zentralen Steuereinheit modular zu erweitern. Beispielsweise können weitere Aktorkomponenten durch die bereits vorgesehene Steuereinheit angesteuert werden. Ebenso können eine Heizung oder Sensoren mit der zentralen Steuereinheit zusammenwirken oder von dieser betrieben werden. Die zentrale Steuereinheit kann räumlich beziehungsweise funktional integriert mit der Versorgungseinheit oder der Leistungselektronik vorgesehen werden, beispielsweise auf der Hauptsteuerungsplatine.

Die Steuertopologie kann insbesondere einen Datenbus zur Verbindung der zentralen Steuereinheit mit den Wechselrichtern der dezentralen Leistungselektronik vorsehen. Hierdurch vereinfacht sich der Aufbau des Gesamtsystems und es sinken der Installationsaufwand und die Kosten. Vorzugsweise wird der Datenbus als serieller Datenbus ausgebildet sein. Bei Verwendung von bürstenlosen Gleichstrommotoren kann über den Datenbus beispielsweise die Drehzahlvorgabe realisiert werden.

Beispielsweise ist vorgesehen, dass die mittels der dezentralen Leistungselektronik betriebenen Pumpenmotoren (Umwälzpumpenmotor, Entleerungspumpenmotor) von der zentralen Steuereinheit koordiniert angetrieben werden. Nach einer speziellen Realisierungsform der Erfindung sieht die Reinigungsvorrichtung das Sammelbehältnis als ein gemeinsames Flüssigkeitsreservoir vor, dem sowohl die Entleerungspumpe als auch die Umwälzpumpe zugeordnet sind. Die zentrale Steuereinheit ist derart realisiert, dass zur Reinigung des Garraums mittels der Umwälzpumpe Flüssigkeit aus dem Sammelbehältnis umgepumpt und dem Garraum zugeführt wird. Insbesondere kann die umgepumpte Flüssigkeit auf das rotierende Ventilationsrad aufgesprüht und vernebelt beziehungsweise verteilt werden. Die Umwälzpumpe und der Ventilationsmotor werden während des Reinigungsvorgangs insofern wenigstens temporär gemeinsam und zeitgleich betrieben. Beispielsweise kann die Entleerungspumpe nach dem Reinigungsvorgang betrieben werden zum Abpumpen der in dem Sammelbehältnis zusammengeflossenen Flüssigkeit und der hierin enthaltenen Schmutzpartikel, Fette und dergleichen. Der Entleerungspumpenmotor wird in diesem Fall getrennt und zeitlich versetzt zum Umwälzpumpenmotor betrieben. Er wird hierbei von der dezentralen Leistungselektronik mit der gemeinsamen Versorgungseinheit und dem Entleerungspumpenmotor zugeordneten Wechselrichter gespeist. Die Ansteuerung erfolgt über eine zentrale Steuereinheit.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Figur 1: eine erste Realisierungsform der erfindungsgemäßen Reinigungsvorrichtung für Küchengeräte und
- Figur 2: eine zweite Realisierungsform der erfindungsgemäßen Reinigungsvorrichtung für Küchengeräte.

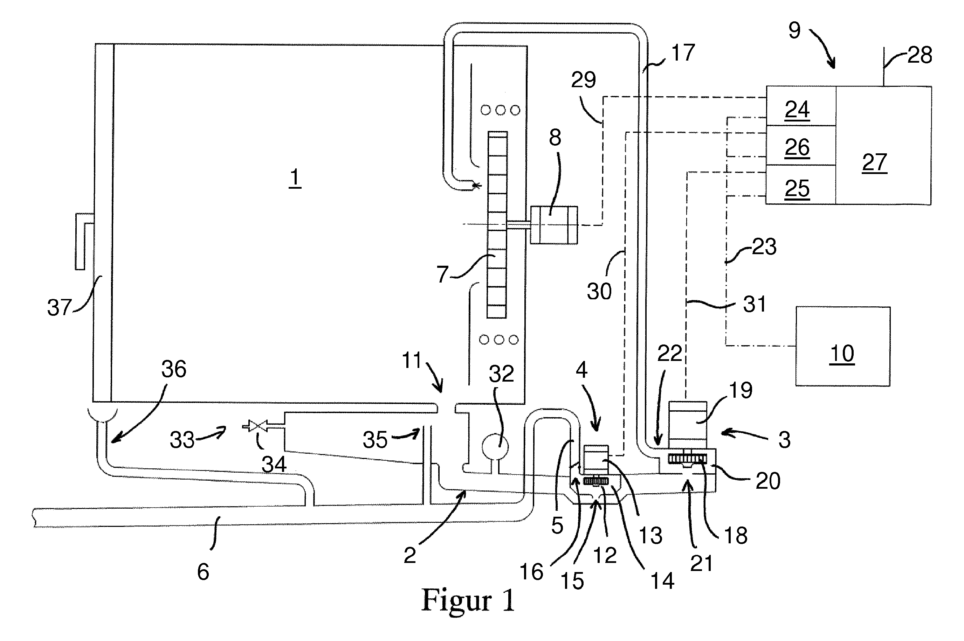

Figur 1 zeigt eine Reinigungsvorrichtung für ein Gargerät mit einem zu reinigenden Garraum 1, mit einem in der dargestellten Einbauposition des Gargeräts unterhalb des Garraums 1 angeordneten Sammelbehältnis 2, mit einer an dem Sammelbehältnis 2 vorgesehenen Umwälzpumpe 3 zum Umwälzen einer im Sammelbehältnis 2 bevorrateten Flüssigkeit, mit einer ebenfalls an dem Sammelbehältnis 2 vorgesehenen Entleerungspumpe 4 zum Abpumpen des in dem Sammelbehältnis 2 vorgesehenen Wassers über eine Steigleitung 5 der Reinigungsvorrichtung in eine Ablaufleitung 6 derselben, mit einem an dem Garraum 1 vorgesehenen Ventilationsrad 7, mit einem Antriebsmotor 8 für das Ventilationsrad 7 sowie mit einer Steuereinrichtung zum Betreiben des Antriebsmotors 8, der Umwälzpumpe 3 und der Entleerungspumpe 4. Die Steuereinrichtung umfasst als wesentliche Komponenten eine dezentrale Leistungselektronik 9 sowie eine zentrale Steuereinheit 10. Die Reinigungsvorrichtung dient der bevorzugt automatisierten Selbstreinigung des Gargeräts nach der Benutzung.

Während des Zubereitens von Speisen in dem dargestellten Gargerät wird über einen nicht dargestellten Dampfgenerator beziehungsweise durch das direkte Einspritzen von Wasser oder anderer Flüssigkeit in den Garraum 1 sichergestellt, dass die Speisen saftig bleiben und nicht austrocknen. Dabei fällt durch Kondensation überschüssiges Wasser an, das aus dem Garraum 1 abgeführt wird. Die aus dem Garraum 1 austretende Flüssigkeit gelangt über eine in einem unteren Bereich des Garraums 1 vorgesehene Auslassöffnung 11 in das Sammelbehältnis 2. Zusammen mit der Flüssigkeit müssen je nach Gargut außerdem Fette oder andere flüssige Substanzen aus dem Garraum 1 abgeführt werden. Des Weiteren können durch das kondensierende Wasser Feststoffe, beispielsweise Kalk bei Verwendung von kalkhaltigem Wasser, gebildet werden. Diese Feststoffe müssen ebenfalls aus dem Garraum 1 abgeführt werden und gelangen in das Sammelbehältnis 2.

Die in dem Sammelbehältnis 2 gesammelten Flüssigkeiten und Feststoffe können mittels der Entleerungspumpe 4 über die Steigleitung 5 in die Ablaufleitung 6 gefördert und wegtransportiert werden. Die Entleerungspumpe 4 ist hier in einem unteren Bereich des Sammelbehältnisses 2 - bezogen auf dessen Einbauposition - vorgesehen. Ein Entleerungspumpenrad 12 der Entleerungspumpe 4, welches über einen Entleerungspumpenmotor 13 betrieben wird, ist in einem an dem Sammelbehältnis 2 als Teil desselben vorgesehenen Förderraum 14 derart positioniert, dass über eine Zulauföffnung 15 die abzufördernde Flüssigkeit in den Förderraum 14 eintritt. Druckseitig wird die abzufördemde Flüssigkeit über eine Auslassöffnung 16 aus dem Förderraum 14 in die Steigleitung 5 und weiter in die Ablaufleitung 6 transportiert.

Ein modernes Gargerät verfügt in der Regel über einen Selbstreinigungsmechanismus. Als Teil des Selbstreinigungsmechanismus sind die Umwälzpumpe 3 sowie eine Umwälzleitung 17 vorgesehen. Über die Umwälzleitung 17 wird von der Umwälzpumpe 3 geförderte Flüssigkeit dem zu reinigenden Garraum 1 zugeführt. Die Umwälzpumpe 3, welche ein Umwälzpumpenrad 18 und einen Umwälzpumpenmotor 19 zum Antreiben des Umwälzpumpenrads 18 vorsieht, ist wie die Entleerungspumpe 4 an dem Sammelbehältnis 2 vorgesehen. Das Umwälzpumpenrad 18 ist einem weiteren Förderraum 20 zugeordnet, wobei auch der Förderraum 14 als Teil des Sammelbehältnisses 2 realisiert ist. Über eine Zulauföffnung 21 gelangt die umzuwälzende Flüssigkeit in den Förderraum 20. Druckseitig wird die umzuwälzende Flüssigkeit über eine Auslassöffnung 22 in die Umwälzleitung 17 gefördert und von dort dem Garraum 1 zugeführt.

Die Steuereinheit 10 der Steuereinrichtung ist als zentrale Steuereinheit 10 ausgebildet. Sie kommuniziert über einen seriellen Datenbus 23 mit drei Wechselrichtern 24, 25, 26. Die Wechselrichter 24, 25, 26 sind als Teil der Leistungselektronik 9 realisiert und speisen den Antriebsmotor 8 des Ventilationsrads 7, den Umwälzpumpenmotor 19 sowie den Entleerungspumpenmotor 13. Weiter umfasst die Leistungselektronik 9 eine gemeinsame Versorgungseinheit 27, die die Wechselrichter 24, 25, 26 speist und einen Gleichrichter, einen Zwischenkreis und einen Leistungsfaktorkorrekturfilter (PFC) umfasst. Die Versorgungseinheit 27 ist über eine Versorgungsleitung 28 an ein Versorgungsnetz (nicht dargestellt) angeschlossen. Die Versorgungseinheit 27 ist insofern als Netzeingangseinheit realisiert. Sie wird an einer Netzspannung betrieben und versorgt die angeschlossenen Wechselrichter 24, 25, 26 mit der vorgesehenen Zwischenkreisspannung. Die Wechselrichter 24, 25, 26 sind unmittelbar benachbart zur Versorgungseinheit 27 der Leistungselektronik 9 dezentral und ortsfern von den Motoren 8, 13, 19 vorgesehen. Die Wechselrichter 24, 25, 26 sind über Motorleitungen 29, 30, 31 mit den Motoren 8, 13, 19 verbunden.

Die zentrale Steuereinheit 10 steuert die Wechselrichter 24, 25, 26 des Antriebsmotors 8, des Entleerungspumpenmotors 13 und des Umwälzpumpenmotors 19 über den Datenbus 23 getrennt und bedarfsgerecht so, dass der Antriebsmotor 8 unabhängig von den Pumpen 3, 4 während des Zubereitens von Speisen betrieben werden kann. Ebenfalls können während der Selbstreinigung die Umwälzpumpe 3 und gegebenenfalls der Antriebsmotor 8 bedarfsgerecht und separat angesteuert werden. Des Weiteren besteht die Möglichkeit, die Entleerungspumpe 4 zum Abfördern der in dem Sammelbehältnis 2 vorgesehenen Flüssigkeit beispielsweise nach der Durchführung der Selbstreinigung unabhängig von den anderen Motoren 8, 19 zu betreiben.

Die dezentrale Anordnung der Leistungselektronik 9 ermöglicht den Betrieb der Motoren 8, 13, 19 bei hohen Umgebungstemperaturen von beispielsweise bis zu 70°C, indem die Versorgungseinheit 27 und gegebenenfalls auch die Wechselrichtern 24, 25, 26 in einem kühlen Installationsraum des Gargeräts vorgesehen werden. Durch die gemeinsame Verwendung der Versorgungseinheit 27 für die drei Wechselrichter 24, 25, 26 werden darüber hinaus Synergien erschlossen und Kosten reduziert. Das Vorsehen von wechselrichtergesteuerten Pumpenmotoren 13, 19 erlaubt den drehzahlvariablen Betrieb dieser Motoren 13, 19 und steigert die Effizienz des gesamten Systems. Vorzugsweise werden die Pumpenmotoren 13, 19 als sogenannte BLDC-Motoren beziehungsweise bürstenlose Gleichstrommotoren realisiert.

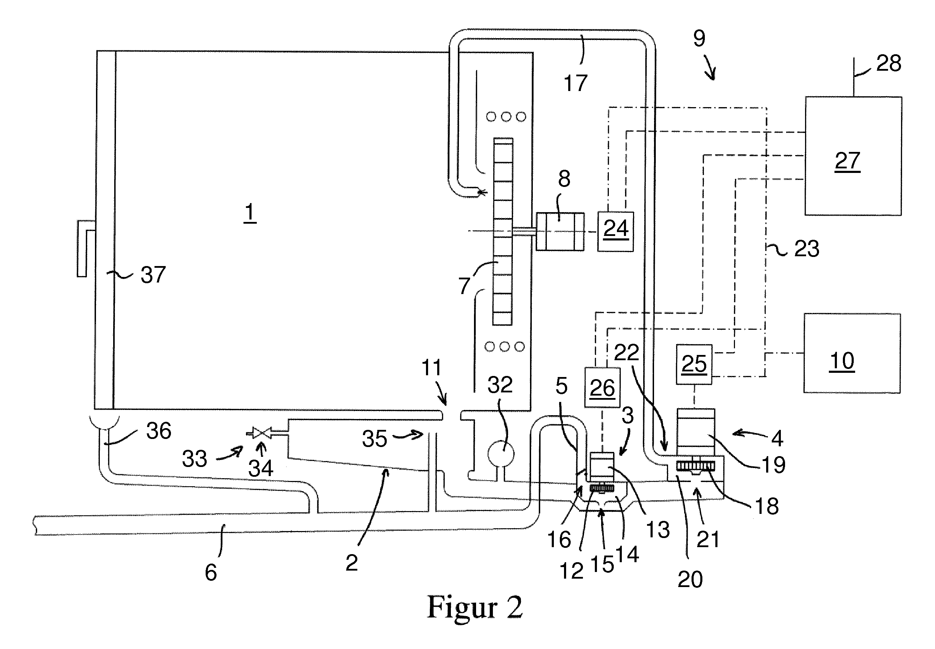

Nach einem zweiten Ausführungsbeispiel der Erfindung gemäß Figur 2 sind die Wechselrichter 24, 25, 26 der Leistungselektronik 9 verteilt angeordnet. Der erste Wechselrichter 24, der zum drehzahlvariablen Antrieb des Antriebsmotors 8 vorgesehen ist, ist unmittelbar an dem Antriebsmotor 8 des Ventilationsrads 7 vorgesehen. Beispielsweise kann der Wechselrichter 24 an einem Lagerschild des Antriebsmotors 8 festgelegt sein. Ebenso sind der zweite Wechselrichter 25 an dem Entleerungspumpenmotor 13 und der dritte Wechselrichter 26 an dem Umwälzpumpenmotor 19 vorgesehen. Auch hier kann die Festlegung der Wechselrichter 25, 26 im Bereich eines Lagerschilds der Motoren 13, 19 erfolgen. Weiter speist die dezentrale Versorgungseinheit 27 der Leistungselektronik 9 die Wechselrichter 24, 25, 26 und versorgt diese mit der benötigten Zwischenkreisspannung. Bevorzugt wird die Versorgungseinheit 27 in einem kühleren Installationsraum des Gargeräts untergebracht. Der serielle Datenbus 23 verbindet die zentrale Steuereinheit 10 und die Wechselrichter 24, 25, 26. Vorteilhaft reduzieren sich durch das Vorsehen der Wechselrichter 24, 25, 26 an den Motoren 8, 13, 19 die elektromagnetischen Störeinflüsse, welche insbesondere von den Motorleitungen 29, 30, 31 ausgehen können.

Gleiche Bauteile und Bauteilfunktionen sind durch gleiche Bezugszeichen gekennzeichnet.

Exemplarisch ist die Erfindung am Beispiel eines Gargeräts beziehungsweise einer Reinigungsvorrichtung für ein Gargerät dargestellt worden. Die Reinigungsvorrichtung kann gleichwohl auch für andere Küchengeräte, insbesondere für Kombidämpfer, Backgeräte oder ähnliche Ofensysteme realisiert werden. Die Küchengeräte können als gewerblich genutzte Küchengeräte oder als Haushaltsküchengeräte ausgeführt sein.

Beide Ausführungsformen der Erfindung sehen an dem Sammelbehältnis 2 einen Sensor 32 zur Erfassung einer in dem Sammelbehältnis 2 vorgesehenen Flüssigkeitsmenge vor. Der Sensor 32 kann beispielsweise nach Art eines Drucksensors ausgebildet sein. Der Sensor 32 kann mit der zentralen Steuereinheit 10 kommunizieren, beispielsweise über den ohnehin vorgesehenen seriellen Datenbus 23. Das Vorsehen des Drucksensors 32 ist hierbei optional. Beispielsweise kann ein Temperatursensor oder ein Sensor zur Bestimmung eines Verschmutzungsgrads der in dem Sammelbehältnis 2 vorgesehenen Flüssigkeit vorgesehen werden.

Weiter kann an dem Sammelbehältnis 2 eine an ein nicht dargestelltes Wasserreservoir angeschlossene Zulaufleitung 33 vorgesehen sein, über den beispielsweise Frischwasser beziehungsweise eine Reinigungsflüssigkeit dem Sammelbehältnis 2 zugeführt wird. Zum wahlweisen Verschließen beziehungsweise Freigeben der Zulaufleitung 33 kann an dieser ein Ventil 34 vorgesehen werden. Optional kann die Zulaufleitung 33 mit dem Garraum 1 derart verbunden sein, dass Frischwasser über die Zulaufleitung 33 unmittelbar in den Garraum 1 eingebracht wird. Unverändert kann das Ventil 34 vorgesehen werden zur Beeinflussung einer über die Zulaufleitung 33 zugeführten Menge an Frischwasser.

Im Bereich des Sammelbehältnisses 2 kann ein Überlauf 35 vorgesehen sein, über den in dem Sammelbehältnis 2 vorgesehene Flüssigkeit unmittelbar der Ablaufleitung 6 zugeführt wird, sobald ein maximal zulässiges Flüssigkeitsniveau in dem Sammelbehältnis 2 überstiegen wird. Ebenso kann ein Ablauf 36 für aus dem Garraum 1 abzuführende Flüssigkeit vorgesehen sein, über den wenigstens einen Teil der Flüssigkeit unter Umgehung des Sammelbehältnisses 2 direkt der Ablaufleitung 6 gelangt. Ein derartiger Ablauf 36 ist beispielsweise im Bereich einer Tür 37 des Gargeräts realisiert.

Nach einem alternativen, nicht dargestellten Ausführungsbeispiel der Erfindung ist der Wechselrichter 24 für den Motor 8 unmittelbar am Antriebsmotor 8 vorgesehen, während die Wechselrichter 25, 26 für die Pumpenmotoren 13, 19 gemeinsam mit der Versorgungseinheit 27 ortsfern zu den Motoren 13, 19 verbaut werden.

## Patentansprüche

1. Reinigungsvorrichtung für Küchengeräte, insbesondere Kombidämpfer, Back-oder Gargeräte,
- mit einem zu reinigenden Garraum (1), welcher durch wenigstens eine Wandung begrenzt ist und an dem wenigstens eine Auslassöffnung (16, 22) für eine Flüssigkeit vorgesehen ist,
- mit einem Ventilationsrad (7), welches dem Garraum (1) zugeordnet ist und einem Antriebsmotor (8) für das Ventilationsrad (7),
- mit einem Sammelbehältnis (2), welches die über die Auslassöffnung (16, 22) aus dem Garraum (1) austretende Flüssigkeit wenigstens temporär aufnimmt und sammelt,
- mit einer an ein Wasserreservoir anschließbaren, wahlweise verschließbaren oder freigebbaren Zulaufleitung (33), über die Flüssigkeit zuführbar ist,
- mit einer Umwälzpumpe (3) zum Pumpen von Flüssigkeit, umfassend ein Umwälzpumpenrad (18) und einen das Umwälzpumpenrad (18) antreibenden Umwälzpumpenmotor (19),
- mit einer Umwälzleitung (17), über die von der Umwälzpumpe (3) geförderte Flüssigkeit dem zu reinigenden Garraum (1) zuführbar ist,
- mit einer an dem Sammelbehältnis (2) angeschlossenen Ablaufleitung (6) zum Abführen der von dem Sammelbehältnis (2) aufgenommenen Flüssigkeit und
- mit einer Steuereinheit (10) zum Betreiben des Antriebsmotors (8) und des Umwälzpumpenmotors (19),
**dadurch gekennzeichnet, dass** die Steuereinrichtung eine dezentrale Leistungselektronik (9) mit einem ersten Wechselrichter (24) für den Antriebsmotor (8) des Ventilationsrads (7) und mit einem zweiten Wechselrichter (25) für den Umwälzpumpenmotor (19) sowie einer für die Wechselrichter (24, 25) gemeinsam vorgesehenen und an ein Versorgungsnetz anschließbare Versorgungseinheit (27), umfassend einen Gleichrichter, einen Zwischenkreis und einen Leistungsfaktorkorrekturfilter, aufweist.

2. Reinigungsvorrichtung nach Anspruch 1, **dadurch gekennzeichnet, dass** zum einen eine Entleerungspumpe (4) mit einem Entleerungspumpenrad (12) und einem das Entleerungspumpenrad (12) antreibenden Entleerungspumpenmotor (13) vorgesehen ist zum Abpumpen der aus dem Garraum (1) austretenden Flüssigkeit über die Ablaufleitung (6) und dass zum anderen als Teil der Leistungselektronik (9) ein dritter Wechselrichter (26) für den Entleerungspumpenmotor (13) realisiert ist, wobei der dritte Wechselrichter (26) mit der gemeinsamen Versorgungseinheit (27) zusammenwirkt zum Betreiben des Entleerungspumpenmotors (13).

3. Reinigungsvorrichtung nach Anspruch 1 oder 2, **dadurch gekennzeichnet, dass** wenigstens einer der von der gemeinsamen Versorgungseinheit (27) gespeisten Wechselrichter (24, 25, 26) räumlich benachbart zu dem betriebenen Motor (8, 13, 19) vorgesehen ist und insbesondere direkt an einem Lagerschild des zugeordneten Motors (8, 13, 19) montiert ist.

4. Reinigungsvorrichtung nach einem der Ansprüche 1 bis 3, **dadurch gekennzeichnet, dass** eine zentrale Steuereinheit (10) vorgesehen ist, welche mit den Wechselrichtern (24, 25, 26) der dezentralen Leistungselektronik (9) zusammenwirkt zum Ansteuern der Motoren (8, 13, 19).

5. Reinigungsvorrichtung nach einem der Ansprüche 1 bis 4, **dadurch gekennzeichnet, dass** die zentrale Steuereinheit (10) und die Wechselrichter (24, 25, 26) der dezentralen Leistungselektronik (9) über einen Datenbus (23), insbesondere einen seriellen Datenbus, verbunden sind.

6. Reinigungsvorrichtung nach einem der Ansprüche 1 bis 5, **dadurch gekennzeichnet, dass** die Umwälzpumpe (3) und die Entleerungspumpe (4) dem Sammelbehältnis (2) derart zugeordnet sind, dass in dem Sammelbehältnis (2) vorgesehene Flüssigkeit mittels der Umwälzpumpe (3) dem Garraum (1) zuführbar ist und/oder mittels der Entleerungspumpe (4) in die Ablaufleitung (6) abpumpbar ist.

7. Reinigungsvorrichtung nach einem der Ansprüche 1 bis 6, **dadurch gekennzeichnet, dass** der Antriebsmotor (8) für das Ventilationsrad (7) und/oder der Umwälzpumpenmotor (19) und/oder der Entleerungspumpenmotor (13) als bürstenlose Gleichstrommotoren oder Synchronmotoren ausgebildet sind.

8. Verwendung einer dezentralen Leistungselektronik (9) in einer Reinigungsvorrichtung für Küchengeräte, insbesondere der Reinigungsvorrichtung nach einem der Ansprüche 1 bis 7, wobei die zentrale Leistungselektronik (9) eine gemeinsame, an ein Versorgungsnetz angeschlossene Versorgungseinheit (27) mit einem Gleichrichter, mit einem Zwischenkreis und mit einem Leistungsfaktorkorrekturfilter sowie eine Mehrzahl von Wechselrichtern (24, 25, 26) zum Ansteuern von Motoren (8, 13, 19) vorsieht, wobei mittels eines ersten Wechselrichters (24) ein Antriebsmotor (8) eines in dem Küchengerät vorgesehenen Ventilationsrads (7) und/oder mittels des zweiten Wechselrichters (25) ein erstes Pumpenrad der Reinigungsvorrichtung, insbesondere ein Umwälzpumpenrad (18) einer zum Pumpen von Flüssigkeit vorgesehenen Umwälzpumpe (3), und/oder wobei mittels des dritten Wechselrichters ein zweites Pumpenrad der Reinigungsvorrichtung, insbesondere ein Entleerungspumpenrad (12), zum Abpumpen von Flüssigkeit aus dem Küchengerät angesteuert werden.
